# DEMANDE DE BREVET EUROPEEN

(11) **EP 0 785 043 A1**
(43) Date de publication de la demande: **23.07.1997**
(21) Numéro de dépôt: 97400005.1
(22) Date de dépôt: 02.01.1997
(51) Int. Cl.: B23K 15/00

(54) **Matériau de soudage pour le soudage par faisceau d'électrons, procédé de soudage, pièce soudée ainsi obtenue et ses utilisations**

(30) Priorité: 18.01.1996 FR 9600534
(71) Demandeur: GEC ALSTHOM TRANSPORT SA, 75116 Paris (FR); CONSTRUCTIONS INDUSTRIELLES DE LA MEDITERRANEE- CNIM, F-75008 Paris (FR)
(72) Inventeur: Rimbaud, Michel, 71670 Le Breuil (FR); Liodenot, Frédéric, 71670 Le Breuil (FR); Gonthier Maurin, Pierre, 83500 La Seyne (FR)
(74) Mandataire: Fournier, Michel

(57) **Abrégé**

La présente invention porte sur un matériau de soudage pour le soudage par faisceau d'électrons, le matériau de soudage étant un matériau en alliage d'aluminium-magnésium-silicium du type 6061 et ayant un rapport R des teneurs en masse Mg/Si dont la valeur est supérieure ou égale à la valeur du rapport stoechiométrique.

## Description

La présente invention concerne le soudage par faisceau d'électrons des alliages d'aluminium, en général, et porte, plus particulièrement, sur un matériau de soudage pour le soudage par faisceau d'électrons, sur les pièces soudées au moyen d'un procédé de soudage par faisceau d'électrons, sur un procédé de soudage par faisceau d'électrons, ainsi que sur l'utilisation du matériau de soudage, de la pièce soudée et du procédé de soudage.

M. Brillant et Y. de Bony indiquent dans l'article "Le soudage par faisceaux d'électrons des alliages d'aluminium", publié dans Matériaux et Techniques, ISSN 0032-6895, Août-Septembre 1980, Volume 68, N°8-9, pages 318 à 330, que le soudage par faisceau d'électrons est un procédé de soudage dont le premier brevet sur le sujet date de 1956.

Le document mentionné ci-dessus décrit les applications du soudage par faisceau d'électrons aux alliages d'aluminium.

Il est actuellement connu que le soudage par faisceau d'électrons des alliages d'aluminium s'accompagne de la formation de silicates qui sont à l'origine de fissures lors de la phase de refroidissement/solidification.

Ces fissures sont inacceptables du fait qu'elles sont incompatibles avec les sollicitations de fatigue subies par la structure soudée.

C'est le mérite de la demanderesse que de proposer une solution à ce problème majeur du soudage par faisceau d'électrons des alliages d'aluminium-magnésium-silicium.

Conformément à l'invention, le matériau de soudage pour le soudage par faisceau d'électrons, qui est un matériau en alliage d'aluminium-magnésium-silicium du type 6061, se caractérise en ce que le matériau en alliage d'aluminium-magnésium-silicium a un rapport R des teneurs en masse Mg/Si dont la valeur est supérieure ou égale à la valeur du rapport stoechiométrique.

Conformément à une autre caractéristique de l'invention, la pièce soudée au moyen d'un procédé de soudage par faisceau d'électrons au moyen d'un matériau de soudage en un matériau en alliage d'aluminium-magnésium-silicium du type 6061, se caractérise en ce que le matériau en alliage d'aluminium-magnésium-silicium a un rapport R des teneurs en masse Mg/Si dont la valeur est supérieure ou égale à la valeur du rapport stoechiométrique.

Conformément à une autre caractéristique de l'invention, le procédé de soudage par faisceau d'électrons au moyen d'un matériau de soudage en un matériau en alliage d'aluminium-magnésium-silicium du type 6061, se caractérise en ce que le matériau en alliage d'aluminium-magnésium-silicium a un rapport R des teneurs en masse Mg/Si dont la valeur est supérieure ou égale à la valeur du rapport stoechiométrique.

Le matériau de soudage, la pièce soudée et le procédé de soudage de l'invention satisfont également à la caractéristique selon laquelle la valeur du rapport R est supérieure ou égale à 1,75.

Conformément à une autre caractéristique de l'invention, le matériau de soudage, la pièce soudée et le procédé de soudage trouvent une utilisation dans le domaine ferroviaire.

Une telle utilisation porte sur la réalisation des châssis de bogie, notamment pour l'assemblage tube/longeron.

Un avantage du matériau de soudage et du procédé de soudage de l'invention est de permettre le soudage par faisceau d'électrons de l'alliage d'aluminium-magnésium-silicium du type 6061 dans tous les cas de figure, en particulier dans le cas de pièces de forte épaisseur, sur joint circulaire et avec recouvrement produisant deux fusions successives.

D'autres buts, caractéristiques et avantages de l'invention apparaîtront à la lecture de la description du matériau de soudage, de la pièce soudée et du procédé de soudage.

La série des alliages 6000 est caractérisée par la formation du composé défini Mg₂Si qui, placé aux joints de grains, permet, après traitement thermique, d'obtenir les caractéristiques mécaniques de l'alliage.

Les teneurs en éléments permises par la norme NF A 50-901 permettent d'obtenir un alliage avec présence de Mg₂Si et un excès de silicium ou un alliage avec présence de Mg₂Si et un excès de magnésium.

Dans le cas d'un excès de silicium, il y a formation dans la zone affectée thermiquement ou dans la zone fondue, d'éléments silicates qui entraînent la formation de fissures.

A l'inverse, un excès de magnésium n'a pas de conséquences fâcheuses sur la santé du joint de soudure.

La solution, conformément à la présente invention, consiste à éviter la formation de silicate et consiste donc en ce que tous les éléments silicium s'allient au magnésium pour former le composé défini Mg₂Si.

Cette condition est réalisée, dans le cas de l'alliage d'aluminium-magnésium-silicium du type 6061, si et seulement si la valeur du rapport R des teneurs en masse Mg/Si est supérieure à la valeur du rapport stoechiométrique.

Le matériau de soudage pour le soudage par faisceau d'électrons, le matériau de soudage étant un matériau en alliage d'aluminium-magnésium-silicium du type 6061, est tel que le matériau en alliage d'aluminium-magnésium-silicium a un rapport R des teneurs en masse Mg/Si dont la valeur est supérieure ou égale à la valeur du rapport stoechiométrique.

La pièce soudée au moyen d'un procédé de soudage par faisceau d'électrons au moyen d'un matériau de soudage en un matériau en alliage d'aluminium-magnésium-silicium du type 6061, est telle que le matériau en alliage d'aluminium-magnésium-silicium a un rapport R des teneurs en masse Mg/Si dont la valeur est supérieure ou égale à la valeur du rapport stoechiométrique.

Le procédé de soudage par faisceau d'électrons au moyen d'un matériau de soudage en un matériau en alliage d'aluminium-magnésium-silicium du type 6061, est tel que le matériau en alliage d'aluminium-magnésium-silicium a un rapport R des teneurs en masse Mg/Si dont la valeur est supérieure ou égale à la valeur du rapport stoechiométrique.

Le matériau de soudage, la pièce soudée et le procédé de soudage de l'invention satisfont également à la caractéristique selon laquelle la valeur dudit rapport R est supérieure ou égale à 1,75.

Le matériau de soudage, la pièce soudée et le procédé de soudage trouvent une utilisation dans le domaine ferroviaire.

Une telle utilisation porte sur la réalisation d'un châssis de bogie, notamment pour l'assemblage tube/longeron.

## Revendications

1. Matériau de soudage pour le soudage par faisceau d'électrons, ledit matériau de soudage étant un matériau en alliage d'aluminium-magnésium-silicium du type 6061, caractérisé en ce que ledit matériau en alliage d'aluminium-magnésium-silicium a un rapport R des teneurs en masse Mg/Si dont la valeur est supérieure ou égale à la valeur du rapport stoechiométrique.

2. Pièce soudée au moyen d'un procédé de soudage par faisceau d'électrons au moyen d'un matériau de soudage en un matériau en alliage d'aluminium-magnésium-silicium du type 6061, caractérisée en ce que ledit matériau en alliage d'aluminium-magnésium-silicium a un rapport R des teneurs en masse Mg/Si dont la valeur est supérieure ou égale à la valeur du rapport stoechiométrique.

3. Procédé de soudage par faisceau d'électrons au moyen d'un matériau de soudage en un matériau en alliage d'aluminium-magnésium-silicium du type 6061, caractérisé en ce que ledit matériau en alliage d'aluminium-magnésium-silicium a un rapport R des teneurs en masse Mg/Si dont la valeur est supérieure ou égale à la valeur du rapport stoechiométrique.

4. Matériau de soudage, pièce soudée ou procédé de soudage selon les revendications 1 à 3, respectivement, dans laquelle/lequel ladite valeur dudit rapport R est supérieure ou égale à 1,75.

5. Utilisation du matériau de soudage, de la pièce soudée ou du procédé de soudage, selon les revendications 1 à 4, respectivement, dans le domaine ferroviaire.

6. Utilisation selon la revendication 5, pour la réalisation d'un châssis de bogie.

7. Utilisation selon la revendication 6, pour l'assemblage tube/longeron.
